# EUROPÄISCHE PATENTSCHRIFT

(11) **EP 1 524 440 B1**
(45) Veröffentlichungstag und Bekanntmachung des Hinweises auf die Patenterteilung: **12.03.2008**
(21) Anmeldenummer: 04024576.3
(22) Anmeldetag: 14.10.2004
(51) Int. Cl.: F16B 21/07

(54) **Schwingungsentkoppelnde Verbindungsanordnung mit Federklammer**
Vibration decoupling connection device with a spring clip
Dispositif d'assemblage à découplage de vibrations muni d'une pince à ressort

(30) Priorität: 14.10.2003 DE 20315778 U
(43) Veröffentlichungstag der Anmeldung: 20.04.2005
(73) Patentinhaber: Böllhoff Verbindungstechnik GmbH, 33649 Bielefeld (DE)
(72) Erfinder: Süssenbach, Rainer, 33803 Steinhagen (DE); Rintelmann, Jochen, 06844 Dresden (DE); Dembowsky, Hans-Joachim, 21035 Hamburg (DE); Jodeleit, Martin, 33617 Bielefeld (DE)
(74) Vertreter: Hauck Patent- und Rechtsanwälte

(56) Entgegenhaltungen:
- DE-U- 29 920 498
- US-A- 5 533 237

## Beschreibung

Die vorliegende Erfindung betrifft eine Verbindungsanordnung zum lösbaren Verbinden eines ersten Bauteils und eines zweiten Bauteils.

Aus der DE 198 36 108 A1 ist eine Steckkupplung bekannt, die aus einem elastisch verformbaren pfannenartigen Kupplungsteil und einem kugelartigen Kupplungsteil besteht. Das pfannenartige Kupplungsteil ist in eine an dem ersten Bauteil vorgesehene Fassung so einsetzbar, dass es darin formschlüssig gehalten wird. Es besteht aus einer Kugelpfanne, einer an dieser angeformten, als Einfiihrabschnitt dienenden, ringförmigen Zwischenwand sowie einer an dieser angeformten rohrförmigen Außenwand, die beim Einsetzen des pfannenartigen Kupplungsteils in Anlage an eine Umfangswand der Fassung gelangt. Das kugelartige Kupplungsteil besteht aus einem Kopf und einem Befestigungsabschnitt, der an dem zweiten Bauteil befestigbar ist.

Bei dieser vorbekannten Steckkupplung ist die als Einführkonus dienende Zwischenwand des pfannenartigen Kupplungsteils kegelstumpfförmig ausgebildet und durch Stege versteift, die sehnenartig zwischen der rohrförmigen Außenwand des pfannenartigen Kupplungsteils verlaufen und durch radiale Rippen mit der Außenseite der Kugelpfanne verbunden sind. Das pfannenartige Kupplungsteil besteht aus einem thermoplastischen Elastomer oder Gummi. Diese Steckkupplung hat aufgrund ihrer Geometrie und des verwendeten Materials schwingungsdämpfende Eigenschaften, so dass sie für eine Schwingungsentkopplung zwischen den beiden Bauteilen sorgt.

Aus dem DE-GM 202 16 836 ist eine Steckkupplung bekannt, bei der die ringförmige Zwischenwand des pfannenartigen Kupplungsteils im Längsschnitt keine Kegelstumpfform, sondern ein wellenförmiges Profil hat. Hierdurch ergibt sich zusätzlich zu der Nachgiebigkeit in axialer Richtung auch eine erhöhte Nachgiebigkeit in radialer Richtung. Das pfannenförmige Kupplungsteil kann daher schwingungsentkoppelnde Ausgleichsbewegungen sowohl in Achsrichtung wie auch quer zur Achse und somit in allen dazwischenliegenden Richtungen, also gewissermaßen dreidimensionale Ausgleichsbewegungen im Raum, ausführen.

Dies bietet die Möglichkeit, das pfannenartige Kupplungsteil aus einem vergleichsweise harten Kunststoff, beispielsweise aus einem Elastomer auf Polyesterbasis mit guter Chemikalienbeständigkeit und Wärmeformbeständigkeit herzustellen. In Frage kommen beispielsweise Polybutylentherephthalat (PBT) und Polyethylentherephthalat (PET).

Diese Materialen haben allerdings die Eigenschaft, dass ihre Härte temperaturabhängig ist. Beispielsweise werden sie bei extrem niedrigen Umgebungstemperaturen von bis zu -40°, wie sie in kalten Klimazonen anzutreffen sind, so hart, dass sich die Steckkupplung nicht mehr mit einem annehmbaren Kraftaufwand lösen lässt. Abgesehen von der Temperaturabhängigkeit der Montage- und Lösekraft ist es bei der vorbekannten Steckkupplung auch relativ schwierig, den Absolutwert der Montage- bzw. Lösekraft für übliche Umgebungsbedingungen präzise festzulegen, da die Materialeigenschaften des verwendeten Kunststoffs wie auch die Geometrie des aus dem Kunststoff bestehenden pfannenartigen Kupplungsteils nicht ohne entsprechenden Aufwand beherrschbar sind.

Eine Verbindungsanordnung nach dem Oberbegriff des Patentanspruchs 1 ist aus US-A-5 533 237 bekannt. Bei der dort offenbarten Verbindungsanordnung besteht die Federklammer aus einem U-förmigen Blattfederclip, der in ein badewannenförmiges Trägerteil einsteckbar ist und in diesem durch Rastvorsprünge gehalten wird.

Der vorliegenden Erfindung liegt die Aufgabe zugrunde, eine Verbindungsanordnung zu schaffen, bei der die zum Schließen bzw. Öffnen der Verbindungsanordnung erforderliche Montage- und Demontagekraft bei Umgebungstemperaturen im Bereich von ca. -40° bis 150°C weitgehend temperaturunabhängig sind und hinsichtlich ihrer Absolutwerte präzise festgelegt werden können, wobei jedoch die schwingungsentkoppelnden Eigenschaften der vorbekannten Steckkupplungen erhalten bleiben sollen.

Diese Aufgabe wird durch die in Anspruch 1 definierte Verbindungsanordnung gelöst.

Bei der erfindungsgemäß ausgebildeten Verbindungsanordnung besteht das pfannenartige Kupplungsteil aus einem Kunststoff-Trägerteil und einer metallischen Federklammer. Die Federklammer des pfannenartigen Kupplungsteils und der Bolzenkopf des bolzenartigen Kupplungsteils sind so ausgebildet, dass sie beim Ineinanderstecken der beiden Kupplungsteile eine Rastverbindung eingehen, welche die beiden Kupplungsteile kraftschlüssig miteinander verbindet.

Die Verwendung einer vorzugsweise aus Federstahl bestehenden Federklammer hat den Vorteil, dass die Montage- und Demontagekraft der Verbindungsanordnung innerhalb des oben angegebenen Temperaturbereiches weitgehend temperaturunabhängig ist. Dies rührt daher, dass die Materialeigenschaften und insbesondere die Federrate der metallischen Federklammer in diesem Temperaturbereich sich praktisch nicht ändern.

Ein weiterer Vorteil der Erfindung besteht darin, dass sich die Abso-lutwerte der Montage- und Demontagekraft der Verbindungsanordnung über die Eigenschaften der Federklammer wie z. B. Materialdicke, Werkstoff, Geometrie, usw. sehr präzise festlegen lässt. Die zum Schließen und Öffnen einer bestimmten Verbindungsanordnung erforderliche Kraft ist daher von Schwankungen der Materialeigenschaften des verwendeten Kunststoffs weit weniger abhängig als im Stand der Technik.

Da das pfannenartige Kupplungsteil nicht nur aus der metallischen Federklammer, sondern zusätzlich aus einem Trägerteil aus Kunststoff besteht, kann dieses Trägerteil so gestaltet werden, dass die erfindungsgemäß ausgebildete Verbindungsanordnung im wesentlichen die gleichen schwingungsentkoppelnden Eigenschaften wie die vorbekannten Steckkupplungen hat. Die erfindungsgemäß ausgebildete Verbindungsanordnung vereinigt somit gewissermaßen die vorteilhaften Eigenschaften einer metallischen Federklammer und die schwingungsentkoppelnden Eigenschaften eines aus Kunststoff bestehenden Kupplungsteils.

Die Federklammer wird mit dem Trägerteil des pfannenartigen Kupplungsteils unlösbar verbunden, indem eine Grundplatte und ein kleiner angrenzender Teil eines an der Grundplatte angeformten Federschenkels der Federklammer durch Spritzgießen mit Kunststoff des Trägerteils umspritzt werden.

Die Federklammer hat mehrere (z. B. vier) von diesen in Umfangsrichtung beabstandeten Federschenkeln, die zum Herstellen der Rastverbindung mit dem Bolzenkopf des bolzenartigen Kupplungsteils unter vorgegebener Vorspannung in Eingriff treten. Die Schenkelenden der Federschenkel haben vorzugsweise einen Halteabschnitt und einen Einführabschnitt, die V-förmig zueinander abgewinkelt sind. Der Bolzenkopf hat dann eine an die Form der Schenkelenden angepasste Ringnut. Diese konstruktive Ausgestaltung der Federklammer und des Bolzenkopfes bietet die Möglichkeit, den Einführabschnitt und den Halteabschnitt der Federenden unterschiedlich so zu gestalten, dass zum Herstellen der Rastverbindung eine kleinere Kraft als zum Lösen der Rastverbindung erforderlich ist.

Das Trägerteil des pfannenartigen Kupplungsteils besteht zweckmäßigerweise aus einem thermoplastischen Elastomer mit guter Chemikalienbeständigkeit und Wärmeformbeständigkeit, während die Federklammer, wie bereits erwähnt, zweckmäßigerweise aus Federstahl besteht.

Weitere vorteilhafte Ausgestaltungen der Erfindung gehen aus den Unteransprüchen hervor.

Anhand der Zeichnungen wird ein Ausführungsbeispiel der Erfindung näher erläutert. Es zeigt:
Fig. 1 einen Längsschnitt durch eine erfindungsgemäß ausgebildete Verbindungsanordnung im montierten und geschlossenen Zustand;
Fig. 2 einen Längsschnitt durch das pfannenartige Kupplungsteil der Verbindungsanordnung im unmontierten Zustand;
Fig. 3 eine Draufsicht auf das pfannenartige Kupplungsteil in Fig. 2;
Fig. 4 eine perspektivische Ansicht von unten auf das pfannenartige Kupplungsteil der Fig. 2 und 3;
Fig. 5 eine Seitenansicht des bolzenartigen Kupplungsteils der Verbindungsanordnung in Fig. 1.

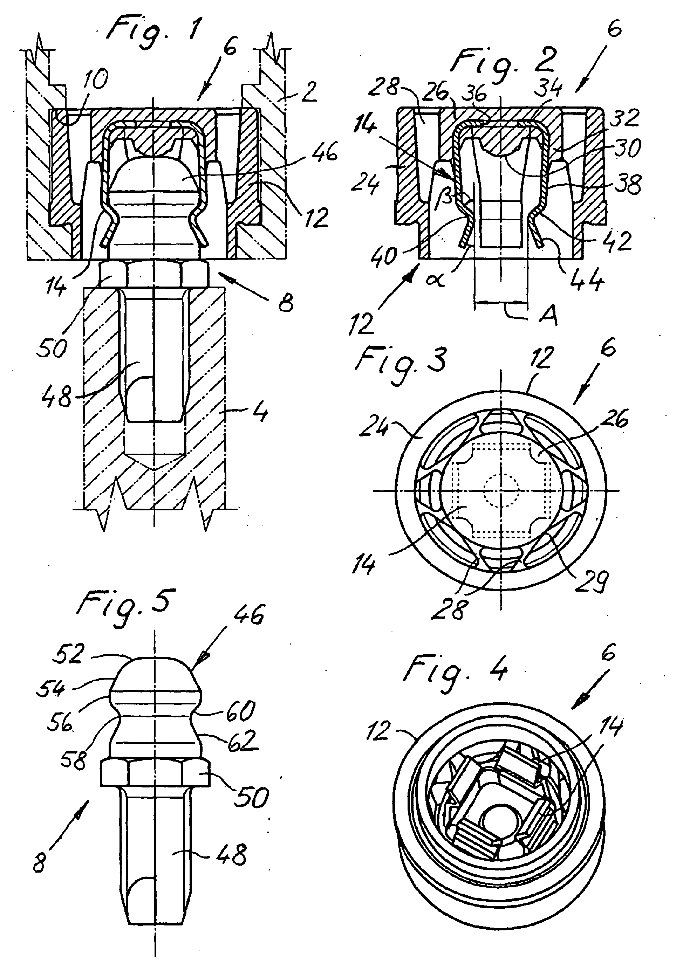

Die in Fig. 1 dargestellte Verbindungsanordnung dient zum lösbaren Verbinden eines Bauteils 2 und eines Bauteils 4, bei denen es sich beispielsweise um lösbar miteinander zu verbindende Bauteile eines Kraftfahrzeuges handeln kann. Die Verbindungsanordnung besteht aus einem pfannenartigen Kupplungsteil 6 und einem bolzenartigen Kupplungsteil 8, von denen das pfannenartige Kupplungsteil 6 in eine Fassung 10 des Bauteils 2 einsetzbar ist und das bolzenartige Kupplungsteil 8 am Bauteil 4 festlegbar ist.

Die Fassung 10 besteht im dargestellten Ausführungsbeispiel aus einer Ausnehmung des Bauteils 2, die teilringförmig bzw. hufeisenförmig ausgebildet ist, um das pfannenartige Kupplungsteil 6 seitlich in die Fassung einschieben zu können. Die Fassung 10 kann im übrigen wie in den Steckkupplungen der oben erwähnten DE 198 36 108 A1 oder DE-GM 202 16 836 ausgebildet sein.

Wie aus den Fig. 1 und 2 hervorgeht, besteht das pfannenartige Kupplungsteil 6 aus einem Trägerteil 12 und einer Federklammer 14. Im dargestellten Ausführungsbeispiel sind das Trägerteil 12 und die Federklammer 14 fest miteinander verbunden, wie noch genauer erläutert wird.

Wie bereits eingangs erwähnt, besteht das Trägerteil 12 aus Kunststoff, vorzugsweise aus einem thermoplastischen Elastomer, insbesondere auf Polyesterbasis, wie z. B. Polybutylentherephthalat (PBT) oder Polyethylentherephthalat (PET). Diese Materialien sind zwar elastisch verformbar, haben jedoch eine relativ hohe Shore-Härte sowie eine ausgezeichnete Wärmeformbeständigkeit (150°C und mehr). Darüber hinaus verfügen sie über eine gute Chemikalienbeständigkeit, insbesondere Dieselölbeständigkeit. Die Federklammer 14 besteht aus einem metallischen Werkstoff, insbesondere Federstahl.

Das Trägerteil 12 hat eine in die Fassung 10 einsetzbare rohrförmige Außenwand 24 und einen zentralen Tragabschnitt 26, die durch in Umfangsrichtung beabstandete Stege 28 miteinander verbunden sind, siehe auch die Fig. 3 und 4. Da die rohrförmige Außenwand 24 eine erheblich größere axiale Länge als der zentrale Tragabschnitt 26 hat, sind die Stege 28 an ihrem (in den Fig. 1, 2 unteren) Ende entsprechend schräg verlaufend ausgebildet, während ihre oberen Enden im dargestellten Ausführungsbeispiel geradlinig sind.

Wie in Fig. 3 zu sehen ist, verlaufen die Stege 28 im wesentlichen tangential zur Umfangswand 29 des Tragabschnittes 26. Die Stege 28 sind hierbei paarweise einander so zugeordnet, dass die Stege eines Paares in Umfangsrichtung entgegengesetzt zueinander gerichtet sind. Aufgrund dieser konstruktiven Ausgestaltung lassen die Stege 28 Relativbewegungen zwischen der rohrförmigen Außenwand 24 und dem zentralen Trägerteil 26 in radialer Richtung zu, um eine entsprechende Schwingungsentkopplung der Verbindungsanordnung im Betrieb zu ermöglichen.

Im dargestellten Ausführungsbeispiel sind die rohrförmige Außenwand 24 und der zentrale Tragabschnitt 26 lediglich durch die im wesentlichen geradlinig verlaufenden Stege 28 miteinander verbunden, was eine entsprechend kompakte Bauweise des Trägerteils 6 ermöglicht.

Der Tragabschnitt 26 des Trägerteils 12 hat auf seiner (in den Fig. 1, 2) unteren Seite einen zentralen linsenförmigen Vorsprung 30, dessen Funktion noch genauer erläutert wird.

Die Federklammer 14 besteht aus einer Grundplatte 34 mit einem zentralen Loch 36 und mehreren (im dargestellten Ausführungsbeispiel vier) Federschenkeln 38. Die Federschenkel 38 sind an der gemeinsamen Grundplatte 34 angeformt und gegenüber dieser - im entspannten Zustand der Fig. 2 - um etwas mehr als 90° umgebogen, so dass sie in der Draufsicht der Fig. 3 einen quadratischen Umriss für eine gleichmäßige Anlage an dem bolzenartigen Kupplungsteil 8 bilden, wie noch genauer erläutert wird.

Die Federklammer 14 wird mit dem Trägerteil 12 dadurch unlösbar verbunden, dass die Grundplatte 34 und ein kleiner angrenzender Teil der Federschenkel 38 in das Material des Trägerteils 12 eingebettet sind, wie dies in den Fig. 1 und 2 zu sehen ist. Dies wird in fertigungstechnischer Hinsicht dadurch erreicht, dass beim Spritzgießen des Trägerteils 12 die Federklammer 14 im Spritzwerkzeug auf einen Kern gesteckt und während des Spritzvorganges mit Kunststoff umspritzt wird. Da hierbei Material auch in das zentrale Loch 36 der Grundplatte 34 eindringt und ein kleiner Teil der Federschenkel 14 vom Material eines ringförmigen Vorsprungs 32 des Tragabschnittes 26 umschlossen werden, ergibt sich ein unlösbarer Formschluss zwischen dem Trägerteil 12 und der Federklammer 14.

Die Federschenkel 38 haben jeweils ein radial einwärts gebogenes Schenkelende 40 zwecks Verrastung mit dem bolzenartigen Kupplungsteil 8. Das Schenkelende 40 setzt sich jeweils aus einem Halteabschnitt 42 und einem Einführabschnitt 44 zusammen, die V-förmig zueinander abgewinkelt sind. Wie sich der Fig. 2 entnehmen lässt, schließt der Einführabschnitt 44 mit der zentralen Achse der Verbindungsanordnung einen Winkel α ein, der kleiner ist als der entsprechende Winkel β des Halteabschnitts 44. Im dargestellten Ausführungsbeispiel liegt der Winkel α in der Größenordnung von 25° und der Winkel β in der Größenordnung von 45°. Es versteht sich jedoch, dass je nach Anwendungsfall auch hiervon abweichende Winkel möglich sind. Die unterschiedliche Größe der Winkel α und β bewirkt, dass zum Schließen der Verbindungsanordnung (Montage) eine kleinere Kraft als zum Öffnen (Demontage) erforderlich ist, wie noch genauer erläutert wird.

Wie in den Fig. 1 und 5 zu sehen ist, besteht das bolzenartige Kupplungsteil 8 aus einem Bolzenkopf 46, einem Befestigungsabschnitt 48 und einem dazwischen angeordneten Antriebsabschnitt 50.

Der Bolzenkopf 46 hat eine abgerundete Endfläche 52, die in eine kegelstumpfförmige Fläche 54 übergeht. An die kegelstumpfförmige Fläche 54 schließt sich eine im wesentlichen zylindrische Bundfläche 56 an. Angrenzend an der Bundfläche 56 ist der Bolzenkopf 46 mit einer Ringnut 58 versehen.

Die Ringnut 58 des Bolzenkopfes 46 ist im wesentlichen an die Form der radial einwärts gebogenen Federenden 40 der Federschenkel 38 der Federklammer 14 angepasst. Genauer gesagt, wird die Ringnut 58 des Bolzenkopfes 46 im wesentlichen von zwei winklig zueinander angeordneten kegelstumpfförmigen Flächen 60 und 62 gebildet, wobei der Konuswinkel der Fläche 62 dem Winkel α der Einführabschnitte 44 der Federschenkel entspricht und der Konuswinkel der Fläche 60 dem Winkel β der Halteabschnitte 42 der Federschenkel entspricht. Der Konuswinkel der kegelstumpfförmigen Fläche 54 entspricht im übrigen ebenfalls im wesentlichen dem Winkel α der Einführabschnitte 44 der Federschenkel 38, so dass die kegelstumpfförmige Fläche 54 beim Schließen der Kupplung eine zentrierende Wirkung auf das bolzenartige Kupplungsteil 8 ausüben kann, wie ebenfalls noch genauer erläutert wird.

Der Befestigungsabschnitt 48 des bolzenartigen Kupplungsteils 8 ist im dargestellten Ausführungsbeispiel als Gewindeabschnitt ausgebildet, während der Antriebsabschnitt 50 ein Sechskant zum Ansetzen eines Schraubenschlüssels ist. Das bolzenartige Kupplungsteil 8 kann daher in eine entsprechende Bohrung des Bauteils 4 eingeschraubt werden, wobei das Gewinde des Befestigungsabschnittes 48 auch als selbstfurchendes Gewinde ausgebildet werden kann. Der Befestigungsabschnitt 48 kann jedoch auch in beliebig anderer Weise ausgebildet werden, wobei eine mit dem Bauteil 4 einstückige Ausgestaltung ebenfalls denkbar ist.

Die Funktionsweise der beschriebenen Verbindungsanordnung ist wie folgt:

Wenn die Kupplungsteile 6 und 8 mit ihrem zugehörigen Bauteil 2 bzw. 4 jeweils fest verbunden sind, ist zum Schließen der Verbindungsanordnung lediglich erforderlich, die beiden Kupplungsteile 6, 8 durch eine Relativbewegung der Bauteile 2 und 4 längs der zentralen Achse ineinander zu stecken, wodurch selbsttätig eine Rastverbindung zwischen der Federklammer 14 des pfannenartigen Kupplungsteils 6 und dem Bolzenkopf 46 des bolzenartigen Kupplungsteils 8 hergestellt wird.

Wie in Fig. 2 angedeutet ist, haben jeweils zwei diametral gegenüberliegende Federschenkel 38 im entspannten Zustand einen vorgegebenen minimalen Innenabstand A. Dieses Maß ist um einen vorgegebenen Betrag kleiner als der kleinste Durchmesser der Ringnut 58 des Bolzenkopfes 46, damit die Federschenkel 38 bei geschlossener Verbindungsanordnung mit einer vorgegebenen Vorspannkraft an dem Bolzenkopf 46 anliegen.

Beim Ineinanderstecken der Kupplungsteile 6 und 8 gleiten zunächst die Einführabschnitte 44 der Federschenkel 38 entlang der kegelstumpfförmige Fläche 54 des Bolzenkopfes 46, wodurch die Federschenkel 38 elastisch auseinandergedrückt werden und hierbei eine entsprechende Zentrierwirkung zwischen dem Bolzenkopf 46 und der Federklammer 14 ausgeübt wird. Sobald sich die Einführabschnitte 44 der Federschenkel 38 über die Bundfläche 56 des Bolzenkopfes 46 hinausbewegt haben, "federn" die Federschenkel 38 radial nach innen, so dass die radial einwärts gebogenen Federenden 40 in die Ringnut 58 des Bolzenkopfes 46 einrasten. Die quadratförmig angeordneten Schenkelenden 40 (siehe auch Fig. 4) liegen nun gleichmäßig an dem rotationssymmetrischen Bolzenkopf 46 an. Genauer gesagt, liegen die Halteabschnitte 42 der Federenden 40 an der kegelstumpfförmigen Fläche 60 des Bolzenkopfes 46 an, während die Einfiihrabschnitte 44 der Federenden 40 an der kegelstumpfförmigen Fläche 62 des Bolzenkopfes 46 anliegen. Wegen der geradlinigen Form der Federenden 40 und der rotationssymmetrischen Form des Bolzenkopfes 46 kommt es hierbei zu einem linienförmigen Kontakt zwischen diesen Flächen.

Die Ineinandersteck-Bewegung der Kupplungsteile 6 und 8 wird dadurch begrenzt, dass sich die abgerundete Endfläche 52 des Bolzenkopfes 46 an den linsenförmigen Vorsprung 30 des Trägerteils 12 anlegt. Der punktförmige Kontakt zwischen dem aus elastisch verformbaren Material bestehenden Trägerteil 12 und dem Bolzenkopf 46 ermöglicht eine Kompensation möglicher Fertigungstoleranzen der involvierten Bauteile. Die Anschlagbegrenzung durch die gegenseitige Anlage des linsenförmigen Vorsprungs 30 des Trägerteils 12 und der abgerundeten Endfläche 52 des Bolzenkopfes 46 sorgt im übrigen für einen spielfreien Sitz zwischen der Federklammer 14 und dem Bolzenkopf 46.

Zum Öffnen der Verbindungsanordnung 6 ist lediglich erforderlich, die Bauteile 2 und 4 in axialer Richtung auseinander zu ziehen, um die Rastverbindung zwischen der Federklammer 14 und dem Bolzenkopf 46 zu lösen. Da der Winkel α der Einfiihrabschnitte 44 der Federschenkel 38 (und der kegelstumpfförmigen Fläche 54 des Bolzenkopfs 46) kleiner ist als der Winkel β der Halteabschnitte 42 (und der kegelstumpfförmigen Fläche 60 des Bolzenkopfes 46), ist die zum Öffnen der Verbindungsanordnung erforderliche Demontagekraft deutlich größer als die zum Schließen der Verbindungsanordnung erforderliche Montagekraft. Auf diese Weise lässt sich die Verbindungsanordnung gegen unbeabsichtigtes Lösen sichern, ohne dass dies zu einer unnötig großen Montagekraft führt.

Die Federungseigenschaften der aus Federstahl bestehenden Federklammer 14 sind innerhalb eines Temperaturbereichs von beispielsweise -40° bis 150°C im wesentlichen unveränderlich. Die Montage- und Demontagekraft der Verbindungsanordnung ist daher - abgesehen von einem gewissen temperaturabhängigen Einfluss des Kunststoff-Trägerteils 12 - temperaturunabhängig. Die Größe der Montage- und Demontagekraft der Verbindungsanordnung lässt sich im übrigen durch die Materialeigenschaften und die Konstruktion (Geometrie, Materialdicke, Anzahl der Federschenkel, etc.) der Federklammer 14 sehr präzise festlegen, wobei die Montage- und Demontagekraft durch entsprechende Auslegung der Winkel α und β in der gewünschten Weise unterschiedlich groß gewählt werden können. Aufgrund des aus elastomeren Kunststoff bestehenden Trägerteils 12 mit den Stegen 28 und einer gegebenenfalls vorgesehenen Zwischenwand wellenförmigen Profils hat die beschriebene Verbindungsanordnung ausgezeichnete schwingungsentkoppelnde Eigenschaften, die denen der Steckkupplungen gemäß den eingangs genannten Schutzrechten vergleichbar sind.

## Patentansprüche

1. Verbindungsanordnung zum lösbaren Verbinden eines ersten Bauteils (2) und eines zweiten Bauteils (4), mit
einem pfannenartigen Kupplungsteil (6) mit einem Trägerteil (12) aus Kunststoff und einer metallischen Federklammer (14), von denen das Trägerteil (12) in das erste Bauteil (2) so einsetzbar ist, dass das pfannenartige Kupplungsteil (6) darin gehalten wird, und
einem bolzenartigen Kupplungsteil (8) mit einem Befestigungsabschnitt (48) zum Festlegen an dem zweiten Bauteil (4) und einem Bolzenkopf (46),
wobei die Federklammer (14) und der Bolzenkopf (46) so ausgebildet sind, dass sie beim Ineinanderstecken der beiden Kupplungsteile (6, 8) eine Rastverbindung zwischen diesen herstellen und
wobei die Federklammer (14) eine Grundplatte (34) und mehrere in Umfangsrichtung beabstandete, an der Grundplatte angeformte Federschenkel (3 8) hat, die zum Herstellen der Rastverbindung unter vorgegebener Vorspannkraft mit dem Bolzenkopf (46) in Eingriff treten,
**dadurch gekennzeichnet,**
**dass** das Trägerteil (12) des pfannenartigen Kupplungsteils (6) eine in eine Fassung (10) des ersten Bauteils (2) einsetzbare rohrförmige Außenwand (24) und einen zentralen Tragabschnitt (26) hat, die durch in Umfangsrichtung beabstandete Stege (28) miteinander verbunden sind, und
**dass** die Federklammer (14) mit dem Trägerteil (12) unlösbar **dadurch** verbunden ist, dass die Grundplatte (34) und ein kleiner angrenzender Teil der Federschenkel (38) in den Kunststoff des zentralen Tragabschnittes (26) des Trägerteils (12) eingebettet ist, während der restliche Teil der Federschenkel aus dem Kunststoff vorsteht.

2. Verbindungsanordnung nach Anspruch 1, **dadurch gekennzeichnet, dass** die Grundplatte (34) der Federklammer (14) eine zentrale Bohrung (36) hat und allseitig einschließlich im Bereich der zentralen Bohrung (36) von Kunststoff des Trägerteils (12) umschlossen ist.

3. Verbindungsanordnung nach Anspruch 1 oder 2, **dadurch gekennzeichnet, dass** die Federschenkel (38) von der Grundplatte (36) der Federklammer (14) unter einem solchen Winkel abgebogen sind, dass der Innenabstand diametral gegenüberliegender Federschenkel im entspannten Zustand der Federklammer kleiner als die zugehörige Abmessung des Bolzenkopfes (46) ist.

4. Verbindungsanordnung nach einem der Ansprüche 1 bis 3, **dadurch gekennzeichnet, dass** jeder der Federschenkel (38) ein radial einwärts gebogenes Schenkelende (40) hat, das zum Herstellen der Rastverbindung in eine Ringnut (58) des Bolzenkopfes (46) einrastet.

5. Verbindungsanordnung nach Anspruch 4, **dadurch gekennzeichnet, dass** das radial einwärts gebogene Schenkelende (40) jedes Federschenkels (38) einen Halteabschnitt (42) und einen Einführabschnitt (44) aufweist, die V-förmig zueinander abgewinkelt sind.

6. Verbindungsanordnung nach Anspruch 5, **dadurch gekennzeichnet, dass** der Einfiihrabschnitt (44) des Schenkelendes (40) jedes Federschenkels (38) mit einer zentralen Achse der Verbindungsanordnung einen kleineren Winkel (α) als der Halteabschnitt (44) einschließt, so dass zum Herstellen der Rastverbindung eine kleinere Kraft als zum Lösen der Rastverbindung erforderlich ist.

7. Verbindungsanordnung nach einem der Ansprüche 4 bis 6, **dadurch gekennzeichnet, dass** die Form der Ringnut (58) des Bolzenkopfes (46) an die Form der Schenkelenden (40) der Federschenkel (38) angepasst ist.

8. Verbindungsanordnung nach einem der vorhergehenden Ansprüche, **dadurch gekennzeichnet, dass** die Stege (28) im wesentlichen tangential zu einer Umfangswand (29) des Tragabschnittes (26) des Trägerteils (12) verlaufen.

9. Verbindungsanordnung nach Anspruch 7 oder 8, **dadurch gekennzeichnet, dass** der Tragabschnitt (26) des Trägerteils (12) einen linsenförmigen Vorsprung (30) hat, an den sich beim Herstellen der Rastverbindung eine abgerundete Endfläche (52) des Bolzenkopfes (46) anlegt, um die Ineinander-Steckbewegung der Kupplungsteile (6, 8) zu begrenzen und einen spielfreien Sitz zwischen der Federklammer (14) und dem Bolzenkopf (46) zu sichern.

10. Verbindungsanordnung nach Anspruch 9, **dadurch gekennzeichnet, dass** sich an die abgerundete Endfläche (52) des Bolzenkopfes (46) eine kegelstumpfförmige Fläche (54) zum Zentrieren des Bolzenkopfes (46) beim Herstellen der Rastverbindung anschließt.

11. Verbindungsanordnung nach einem der vorhergehenden Ansprüche, **dadurch gekennzeichnet, dass** das bolzenartige Kupplungsteil (8) einen Antriebsabschnitt (50) hat, der zwischen dem Bolzenkopf (46) und dem Befestigungsabschnitt (48) angeordnet ist.

12. Verbindungsanordnung nach einem der vorhergehenden Ansprüche, **dadurch gekennzeichnet, dass** das pfannenartige Kupplungsteil (6) aus einem Werkstoff der Gruppe der thermoplastischen Elastomere besteht.

13. Verbindungsanordnung nach einem der vorhergehenden Ansprüche, **dadurch gekennzeichnet, dass** die Federklammer (14) aus Federstahl besteht.

14. Pfannenartiges Kupplungsteil für eine Verbindungsanordnung zum lösbaren Verbinden eines ersten Bauteils (2) und eines zweiten Bauteils (4) nach einem der vorhergehenden Ansprüche, mit einem Trägerteil (12) aus Kunststoff und einer metallischen Federklammer (14), von denen das Trägerteil (12) in das erste Bauteil (2) so einsetzbar ist, dass das pfannenartige Kupplungsteil darin gehalten wird, und die Federklammer (14) eine Grundplatte (34) und mehrere in Umfangsrichtung beabstandete, an der Grundplatte angeformte Federschenkel (38) hat, **dadurch gekennzeichnet, dass** das Trägerteil (12) eine in eine Fassung (10) des ersten Bauteil (2) einsetzbare rohrförmige Außenwand (24) und einen zentralen Tragabschnitt (26) hat, die durch in Umfangsrichtung beabstandete Stege (28) miteinander verbunden sind, und dass die Federklammer (14) mit dem Trägerteil (12) **dadurch** unlösbar verbunden ist, dass die Grundplatte (34) und ein kleiner angrenzender Teil der Federschenkel in den Kunststoff des zentralen Tragabschnittes (26) des Trägerteils (12) eingebettet ist, während der restliche Teil der Federschenkel (38) aus dem Kunststoff vorstehen.

## Claims

1. Connection assembly for releasably connecting a first structural member (2) and a second structural member (4), with
a female coupling member (6) comprising a plastic support member (12) and a metallic spring clamp (14) of which the support member (12) is insertable into the first structural member (2) such that the female coupling member (6) is retained therein, and
a male coupling member (8) comprising a mounting portion (48) for being fixed to the second structural member (4), and a head portion (46),
the spring clamp (14) and the head portion (46) being arranged such that they provide for a snap-in connection between them when the two coupling member (6, 8) are inserted into each other, and
the spring clamp (14) having a base plate (34) and a plurality of circumferentially spaced spring legs (38) integral with the base plate and engaging the head portion (46) under a predetermined biasing force for providing the snap-in connection,
**characterized in that**
the support member (12) of the female coupling member (6) has a tubular outer wall (24) insertable into a socket (10) of the first structural member (2), and a central supporting portion (26), which are connected to each other by circumferentially spaced webs (28), and
the spring clamp (14) is non-releasably connected to the support member (12) by the base plate (34) and a small adjacent part of the spring legs (38) being embedded into the plastic material of the central support portion (26) of the support member (12) while the remaining part of the spring legs project from the plastic material.

2. Connection assembly according to claim 1, **characterized in that** the base plate (34) of the spring clamp (14) has a central bore (36) and is completely embedded in plastic material of the support member (12) including in the area of the central bore (36).

3. Connection assembly according to claim 1 or claim 2, **characterized in that** the spring legs (38) are bent from the base plate (36) of the spring clamp (14) under such an angle that the internal distance of diametrically opposed spring legs is less than the associated dimension of the head portion (46) in the relaxed condition.

4. Connection assembly according to any of claims 1 to 3, **characterized in that** each of the spring legs (38) has a radially inwards bent end snappingly engaging into an annular groove (58) of the head portion (46) for providing the snap-in connection.

5. Connection assembly according to claim 4, **characterized in that** the radially inwards bent end (40) of each spring leg (38) has a holding portion (42) and an insertion portion (44) which are inclined to each other in V-shaped relationship.

6. Connection assembly according to claim 5, **characterized in that** the insertion portion (44) of the leg end (40) of each spring leg (38) is inclined with respect to a central axis of the connection assembly by a smaller angle (α) than the holding portion (44) such that closing the snap-in connection requires a smaller force than releasing the snap-in connection.

7. Connection assembly according to any of claims 4 to 6, **characterized in that** shape of the annular groove (58) of the head portion (46) is adapted to the form of the leg ends (40) of the spring legs (38).

8. Connection assembly according to any of the preceding claims, **characterized in that** the webs (28) extend substantially tangentially with respect to a peripheral wall (29) of the support portion (26) of the support member (12).

9. Connection assembly according to claim 7 or claim 8, **characterized in that** the support portion (28) of the support member (12) has a lens-shaped projection (30) which, when the snap-in connection is closed, engages a rounded end surface (52) of the head portion (46) so as to limit insertion of the male and female coupling members (6, 8) and ensure play-less engagement between the spring clamp (14) and the head port (46).

10. Connection assembly according to claim 9, **characterized in that** the rounded end surface (52) of the head portion (46) is followed by a conical surface (54) for centering the head portion (46) when the snap-in connection is closed.

11. Connection assembly according to any of the preceding claims, **characterized in that** the male coupling member (8) has a drive portion (50) disposed between the head portion (46) and the mounting portion (48).

12. Connection assembly according to any of the preceding claims, **characterized in that** the female coupling member (6) is made of a material of the group of thermoplastic elastomers.

13. Connection assembly according to any of the preceding claims, **characterized in that** the spring clamp (14) is made of spring steel.

14. Female coupling member for a connection assembly for releasably connecting a first structural member (2) and a second structural member (4) according to any of the preceding claims, with a plastic support member (12) and a metallic spring clamp (14) of which the support member (12) is insertable into the first structural member (2) such that the female coupling member is retained therein, and the spring clamp (14) has a base plate (34) and a plurality of circumferentially spaced spring legs (38) integral with the base plate, **characterized in that** the support member (12) has a tubular outer wall insertable into a socket (10) of the first structural member (2), and a central support portion (26) which are connected to each other by circumferentially spaced webs (28), and **in that** the spring clamp (14) is non-releasably connected to the support member (12) by the base plate (34) being embedded into the plastic material of the central support portion (26) of the support member (12) whereas the spring legs (38) project from the plastic material.

## Revendications

1. Dispositif d'assemblage pour l'assemblage de manière amovible d'un premier composant (2) et d'un second composant (4), comprenant
une pièce d'accouplement (6) en forme de poche avec une pièce de support (12) en matière plastique et une pince à ressort (14) métallique dont la pièce de support (12) peut être placée dans le premier composant (2) de sorte que la pièce d'accouplement (6) en forme de poche y est maintenue, et
une pièce d'accouplement (8) en forme de boulon avec une section de fixation (48) pour la fixation avec le second composant (4) et une tête de boulon (46),
la pince à ressort (14) et la tête de boulon (46) étant constituées de sorte que lors de l'emboîtement l'une dans l'autre des deux pièces d'accouplement (6, 8) elles réalisent un assemblage par enclenchement entre celles-ci et
la pince à ressort (14) présentant une plaque de base (34) et plusieurs branches de ressort (38) espacées dans la direction circonférentielle formées sur la plaque de base qui entrent en prise avec la tête de boulon (46) pour la réalisation de l'assemblage par enclenchement sous une force de précontrainte donnée,
**caractérisé en ce que**
la pièce de support (12) de la pièce d'accouplement (6) en forme de poche présente une paroi externe (24) tubulaire, pouvant être placée dans une douille (10) du premier composant (2), et une section de support centrale (26) qui sont reliées ensemble par des traverses (28) espacées dans la direction circonférentielle, et
**en ce que** la pince à ressort (14) est assemblée avec la pièce de support (12) de manière inamovible par le fait que la plaque de base (34) et une petite partie avoisinante des branches de ressort (38) sont enrobées dans la matière plastique de la section de support centrale (26) de la pièce de support (12), alors que la partie restante des branches de ressort dépasse de la matière plastique.

2. Dispositif d'assemblage selon la revendication 1, **caractérisé en ce que** la plaque de base (34) de la pince à ressort (14) présente un alésage central (36) et est entourée de tous les côtés y compris dans la zone de l'alésage central (36) de matière plastique de la pièce de support (12).

3. Dispositif d'assemblage selon la revendication 1 ou 2, **caractérisé en ce que** les branches de ressort (38) sont pliées par rapport à la plaque de base (36) de la pince à ressort (14) dans un tel angle que l'écart interne entre des branches de ressort diamétralement opposées lorsque la pince à ressort est à l'état détendu est inférieur à la dimension correspondante de la tête de boulon (46).

4. Dispositif d'assemblage selon l'une quelconque des revendications 1 à 3, **caractérisé en ce que** chacune des branches de ressort (38) présente une extrémité de branche (40) courbée radialement vers l'intérieur qui entre en prise dans une rainure annulaire (58) de la tête de boulon (46) pour la réalisation de l'assemblage par enclenchement.

5. Dispositif d'assemblage selon la revendication 4, **caractérisé en ce que** l'extrémité de branche (40) courbée radialement vers l'intérieur de chaque branche de ressort (38) présente une section de retenue (42) et une section d'insertion (44) qui forment entre elles un angle en forme de V.

6. Dispositif d'assemblage selon la revendication 5, **caractérisé en ce que** la section d'insertion (44) de l'extrémité de branche (40) de chaque branche de ressort (38) forme avec un axe central du dispositif d'assemblage un angle (α) plus petit que la section de retenue (44) de sorte que pour réaliser l'assemblage par enclenchement une force plus faible est nécessaire que pour libérer l'assemblage par enclenchement.

7. Dispositif d'assemblage selon l'une des revendications 4 à 6, **caractérisé en ce que** la forme de la rainure annulaire (58) de la tête de boulon (46) est adaptée à la forme des extrémités de branche (40) des branches de ressort (38).

8. Dispositif d'assemblage selon l'une quelconque des revendications précédentes, **caractérisé en ce que** les traverses (28) sont essentiellement tangentielles à une paroi périphérique (29) de la section de support (26) de la pièce de support (12).

9. Dispositif d'assemblage selon la revendication 7 ou 8, **caractérisé en ce que** la section de support (26) de la pièce de support (12) présente une saillie (30) lenticulaire sur laquelle s'appuie une surface d'extrémité arrondie (52) de la tête de boulon (46) lors de la réalisation de l'assemblage par enclenchement afin de limiter le mouvement d'emboîtement des pièces d'accouplement (6, 8) et d'assurer un ajustement sans jeu entre la pince à ressort (14) et la tête de boulon (46).

10. Dispositif d'assemblage selon la revendication 9, **caractérisé en ce qu'**une surface de forme tronconique (54) est contiguë à la surface d'extrémité arrondie (52) de la tête de boulon (46) pour le centrage de la tête de boulon (46) lors de la réalisation de l'assemblage par enclenchement.

11. Dispositif d'assemblage selon l'une quelconque des revendications précédentes, **caractérisé en ce que** la pièce d'accouplement en forme de boulon (8) présente une section d'entraînement (50), qui est placée entre la tête de boulon (46) et la section de fixation (48).

12. Dispositif d'assemblage selon l'une quelconque des revendications précédentes, **caractérisé en ce que** la pièce d'accouplement (6) en forme de poche est composée d'un matériau du groupe des élastomères thermoplastiques.

13. Dispositif d'assemblage selon l'une quelconque des revendications précédentes, **caractérisé en ce que** la pince à ressort (14) est constituée d'acier à ressorts.

14. Pièce d'accouplement en forme de poche pour un dispositif d'assemblage pour l'assemblage de manière amovible d'un premier composant (2) et d'un second composant (4) selon l'une quelconque des revendications précédentes, muni d'une pièce de support (12) en matière plastique et d'une pince à ressort (14) métallique dont la pièce de support (12) peut être placée dans le premier composant (2) de sorte que la pièce d'accouplement en forme de poche y est maintenue, et la pince à ressort (14) présente une plaque de base (34) et plusieurs branches de ressort (38) espacées dans la direction circonférentielle formées sur la plaque de base, **caractérisée en ce que** la pièce de support (12) présente une paroi externe (24) tubulaire pouvant être placée dans une douille (10) du premier composant (2) et une section de support centrale (26) qui sont reliées ensemble par des traverses (28) espacées dans la direction circonférentielle, et **en ce que** la pince à ressort (14) est assemblée avec la pièce de support (12) de manière inamovible par le fait que la plaque de base (34) et une petite partie avoisinante des branches de ressort sont enrobées dans la matière plastique de la section de support centrale (26) de la pièce de support (12), alors que la partie restante des branches de ressort (38) dépasse de la matière plastique.
